# EUROPEAN PATENT SPECIFICATION

(11) **EP 1 202 074 B1**
(45) Date of publication and mention of the grant of the patent: **27.04.2005**
(21) Application number: 01125666.6
(22) Date of filing: 26.10.2001
(51) Int. Cl.: G01S 7/481, G01S 17/42, G01S 17/89, G01B 11/14, G01B 11/24

(54) **Distance measuring apparatus and distance measuring method**
Anordnung und Verfahren zur Entfernungsmessung
Dispositif et méthode pour mesurer une distance

(30) Priority: 27.10.2000 JP 2000328284; 30.10.2000 JP 2000331532
(43) Date of publication of application: 02.05.2002
(73) Proprietor: Honda Giken Kogyo Kabushiki Kaisha, Minato-ku, Tokyo (JP)
(72) Inventor: Aoyama, Chiaki, K. K. Honda Gijutsu Kenkyusho, Wako-shi, Saitama-ken (JP)
(74) Representative: Liska, Horst, Dr.-Ing.

(56) References cited:
- DE-A- 19 721 688
- US-A- 5 812 269
- SCHUHMANN R ET AL: "TELEZENTRISCHE SYSTEME FUER DIE OPTISCHE MESS- UND PRUEFTECHNIK. TELECENTRIC SYSTEMS FOR OPTICAL MEASUREMENT AND TESTING" , TECHNISCHES MESSEN TM, R.OLDENBOURG VERLAG. MUNCHEN, DE, VOL. 65, NR. 4, PAGE(S) 131-136 XP000781182 ISSN: 0171-8096 * the whole document *

## Description

The present invention relates to a distance measuring apparatus and to a method for measuring the distance from the apparatus to an object by imaging reflected light of laser light emitted from the apparatus, and then referring to a positional relationship between the light emission position and the image position.

Recently, CCD (Charge Coupled Device) cameras and computer image processing techniques have been improved, and accordingly, three-dimensional measurement methods using images have become common. An example of such three-dimensional measurement methods using a CCD camera and computer image processing is a light-section method. In the light-section method, light passing through a slit is projected onto a target object to be measured, so as to virtually cut the object using a band-shaped light, and a cut surface is observed in a direction other than the direction of the projected light. Because very fine and intense light beams can be obtained by laser technology, even an object having an irregular surface can be measured at high speed and with high accuracy by employing three-dimensional measurement using the light-section method.

Generally, in the light-section method, the distance to the target object is determined using the principle of triangulation. In triangulation, a triangle is defined by connecting two known reference points and any other third point, and the position of the third point is determined by measuring the angles of the triangle. More specifically, in the light-section method, light which is emitted from a light source within a distance measuring apparatus and passes through a slit is projected onto an object, and the reflected light from the surface of the object is imaged by a CCD camera provided within the distance measuring apparatus. The distance between the distance measuring apparatus and the target object is measured based on the direction of the emitted light and the positions of the light source and the CCD camera. Therefore, it is preferable that the intensity of the reflected light imaged by the CCD camera is constant. Moreover, in the case where the light generated by the distance measuring apparatus is imaged by a CCD camera or the like, it is convenient from the point of image processing, that light which the apparatus has not emitted is not input to the CCD camera. Therefore, in measuring using light, generally an optical filter is used which only passes light of a wavelength of the light emitted by the apparatus, so that light of the surrounding environment is not input.

However, when a floor surface or an obstacle on a floor surface is detected using the light-section method in an optical sensor of a self-controlled mobile robot, if the measurement range of the viewing angle is wider, more candidates can be selected for the movement path. Therefore, it is desirable to use an optical system having a wide viewing angle. On the other hand, an optical filter constituted so as to only pass a specific wavelength band by using interference, has a characteristic in that the pass central wavelength changes according to the incident angle of the incident light.

Therefore if measurement is performed by attaching to an optical system of a CCD camera, an optical filter constituted so as to pass only a wavelength band of laser light generated by the apparatus, the viewing angle becomes narrow. Consequently, the range which can be measured becomes narrow and the path selection process becomes difficult. Furthermore, in the case of imaging laser light generated by the apparatus at a wide angle of view, the pass wavelength band of the optical filter must be made wide. However, if the pass wavelength band is made wide, disturbance light external to the laser light is also imaged. Therefore processing for extracting only laser light from the obtained image must be performed solely by image processing, making the image processing complex. Consequently, this invites a drop in processing speed, and the traveling speed of the self-controlled mobile robot is thus reduced.

From DE 197 21 688 A1 a distance measuring apparatus using the principle of triangulation is known. The apparatus has a laser emitting device projecting slit light on a target object. The reflected laser light is imaged on a CCD chip by a double telecentric optical lens system. Inorder to focus the surface of the target onto the CCD chip even if the height of the surface is widely varying the image plane of the CCD chip is inclined versus the optical axis of the double telecentric optical lens system according to the Scheimpflug rule. The CCD chip is mounted on a tumtable within a casing shielding the CCD chip against disturbance light. Between the telecentric optical system and the CCD chip, an optical filter can be provided for passing only light of the laser wavelength onto the CCD chip.

It is an object of the present invention to provide a distance measuring apparatus and a distance measuring method utilizing a light-section method capable of preventing input of disturbance light and to provide a wide measuring viewing angle.

This problem is solved by the features of claim 1 and claim 5, respectively.

In a case where reflected light of laser light such as slit light emitted from an apparatus is imaged, and the distance to an object is measured by referring to a positional relationship between the light emission position of the laser light and the image position, then because the imaging optical system is constructed so that the reflected light is input perpendicular to the incident surface of the optical filter which passes only light of a wavelength band of the laser light emitted by the apparatus, the disturbance light can be removed without narrowing the measurement viewing angle. Furthermore, since in the image to be imaged, only the reflected light of the laser light is included, measurement of the floor surface and recognition processing for an obstacle on the floor surface can be simplified. Moreover, since the disturbance light is removed and recognition processing for an obstacle is simplified, when the present invention is applied to a visual sensor of a self-controlled mobile robot, for example, it is possible to prevent the traveling speed of the self-controlled mobile robot from being reduced.

### BRIEF DESCRIPTION OF THE DRAWINGS

FIG. 1 is a block diagram showing the structure of a distance measuring apparatus according to an embodiment of the present invention.
FIG. 2 is a block diagram showing the structure of a laser light source 11 shown in FIG. 1.
FIG. 3 is a diagram showing the external appearance of a bipedal robot 1.
FIG. 4 is a diagram showing a positional relationship between a lens system provided in a short baseline length camera 12 and a long baseline length camera 13 shown in FIG. 1, and an optical filter.
FIG. 5 is a schematic diagram showing a state in which laser light is emitted from an optical system 2.

### DETAILED DESCRIPTION OF THE PREFERRED EMBODIMENTS

As follows is a description of a distance measuring apparatus according to an embodiment of the present invention, with reference to the drawings.

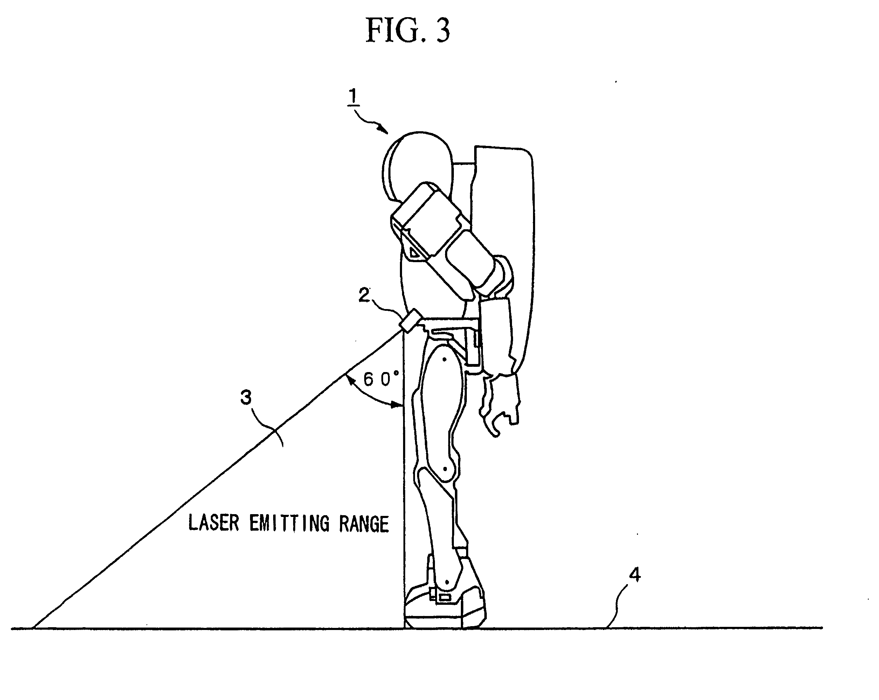

First, with reference to FIG. 3, a bipedal robot to which a distance measuring apparatus is attached will be described. In FIG. 3, reference numeral 1 indicates a self-controlled bipedal robot (hereinafter abbreviated to 'robot'). Reference numeral 2 indicates an optical system of the distance measuring apparatus which is attached to the robot 1 at waist level. Reference numeral 3 indicates a laser light emission range of the optical system 2, where the laser light which has passed through a slit (also referred to hereunder as slit light) is spread over 60 degrees in a single plane, with this slit light being projected towards a floor surface 4. In addition, the orientation of the optical system 2 is adjusted so that the slit light is projected onto the floor surface in front of the tip of a foot of the robot 1.

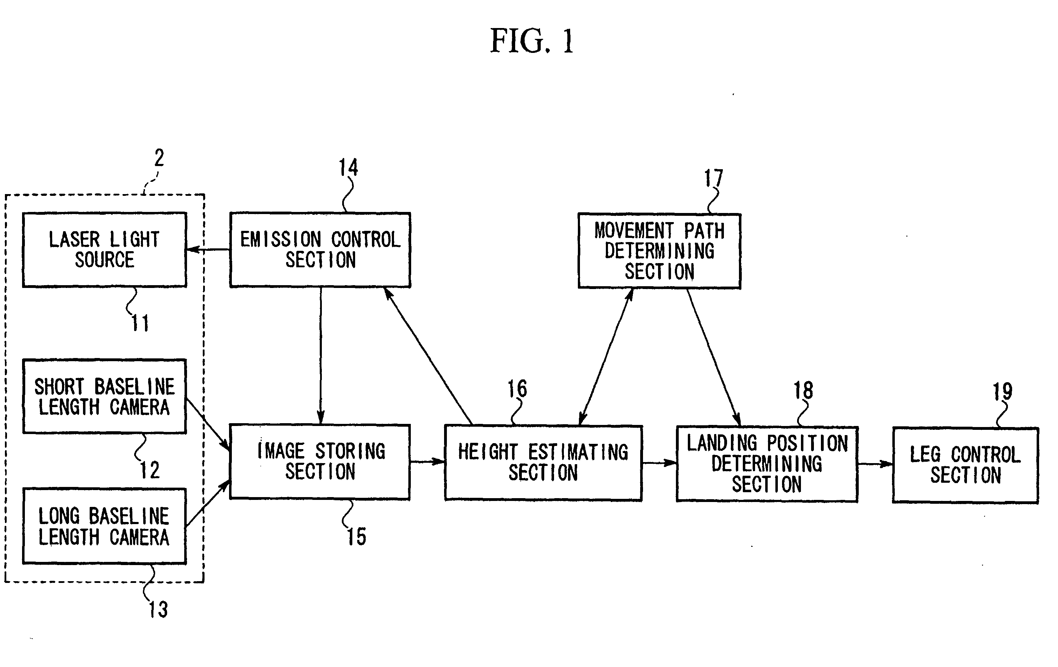

FIG. 1 is a block diagram showing the structure of the distance measuring apparatus according to the present embodiment. In this figure, reference numeral 11 indicates a laser light source for emitting laser light towards the target object to be measured. Reference numeral 12 indicates a short baseline length camera arranged close to the laser light source 11, and comprises a CCD camera. Because the short baseline length camera 12 has a short baseline length the accuracy for measuring distance is poor, although a large distance range in front of the robot 1 can be observed with this camera 12. Reference numeral 13 indicates a long baseline length camera arranged away from the laser light source 11, and also comprises a CCD camera. Because this long baseline length camera 13 has a long baseline length the associated accuracy for measuring distance is high, although the distance range in front of the robot 1 is limited.

Reference numeral 2 indicates the optical system shown in FIG. 3, and incorporates the laser light source 11, the short baseline length camera 12 and the long baseline length camera 13. Reference numeral 14 indicates an emission control section for controlling the laser light source 11 by outputting a control signal which controls the emission of the laser light to the laser light source 11. Reference numeral 15 indicates an image storing section having an image memory for storing the image signals output from the two cameras.

Reference numeral 16 indicates a height estimating section for estimating the height of an object ahead by referring to the distance to the object determined based on the image data stored in the image storing section 15. Reference numeral 17 indicates a movement path determining section for determining the path of movement of the robot 1 in accordance with the state of the target object as estimated by the height estimating section 16. Reference numeral 18 indicates a landing position determining section for determining the landing position of the legs of the robot 1 based on the path chosen by the movement path determining section 17 and the height of the object estimated by the height estimating section 16. Reference numeral 19 indicates a leg control section for controlling the legs so as to land the foot on the landing position determined by the landing position determining section 18.

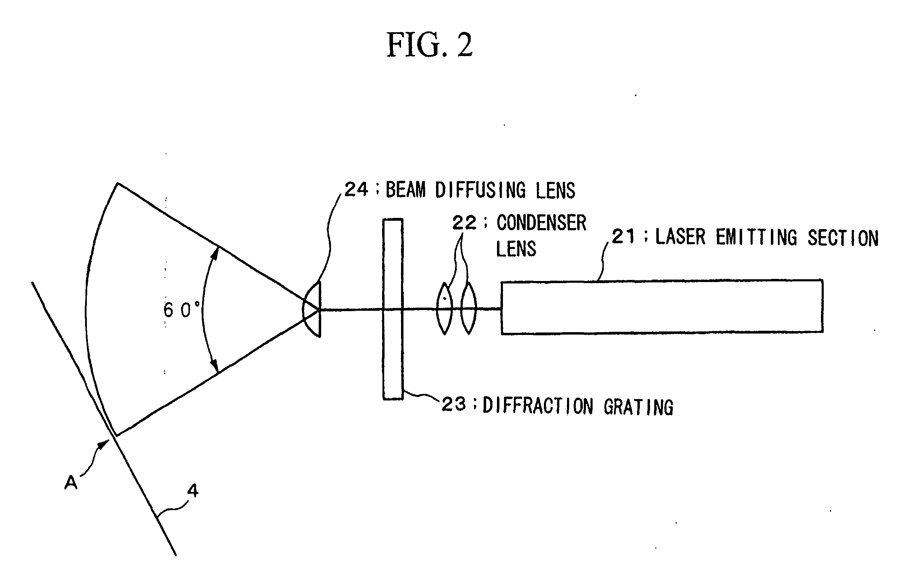

Next, the structure of the laser light source 11 shown in FIG. 1 will be described in detail with reference to FIG. 2. FIG. 2 is a block diagram showing the structure of the laser light source 11 shown in FIG. 1. In the figure, reference numeral 21 indicates a laser emitting section for emitting laser light. Reference numeral 22 indicates a condenser lens for condensing the laser light emitted from the laser emitting section 21, so as to obtain a narrow, condensed beam. Reference numeral 23 indicates a diffraction grating for dividing the laser beam condensed through the condenser lens 22 into a plurality of beams. Here, the divided beams are aligned in the direction perpendicular to the plane of FIG. 2. Reference numeral 24 indicates a beam diffusing lens using a cylindrical lens or the like. This beam diffusing lens is provided for diffusing each laser beam in a single plane so as to generate a beam having a beam form obtained by passing through a slit. Each of the plurality of beams is diffused by the beam diffusing lens 24 so as to have a diffusion angle of 60 degrees.

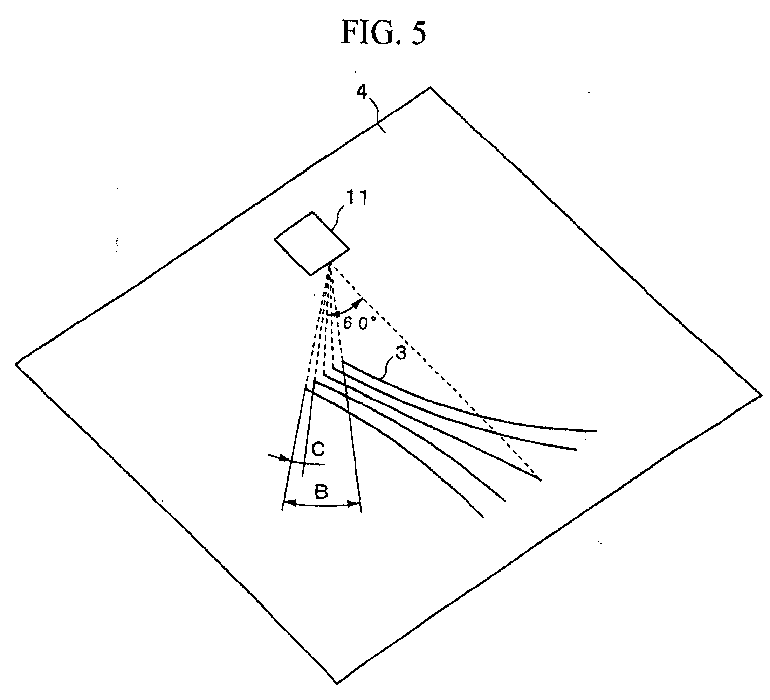

Moreover, in FIG. 2, in order to show the positional relationship of the floor surface, reference numeral 4 indicates a line representing the floor surface, and reference symbol A indicates the point where the tip of the foot of the robot 1 is positioned. Furthermore, the schematic diagram of FIG. 5 shows a state in which the laser light is emitted from the optical system 2 which is attached to the robot 1 at waist level. In FIG. 5, reference numeral 11 indicates the laser light source. Reference numeral 3 indicates the laser emission range of laser light from the laser light source emitted onto the floor surface 4. Here, the laser light is divided into five beams by the diffraction grating 23, and the five beams are diffused by 60 degrees through the beam diffusing lens 24. These laser beams are projected towards the floor surface 4, and images of the light reflected by the floor surface are taken by the short baseline length camera 12 and the long baseline length camera 13. In FIG. 5, in order to make the figure easy to understand, the diffraction grating 23 divides the laser light into five beams, but in practice, angle B in FIG. 5 is 32 degrees and angle C is 1.6 degrees. Accordingly, the number of beams will be twenty one.

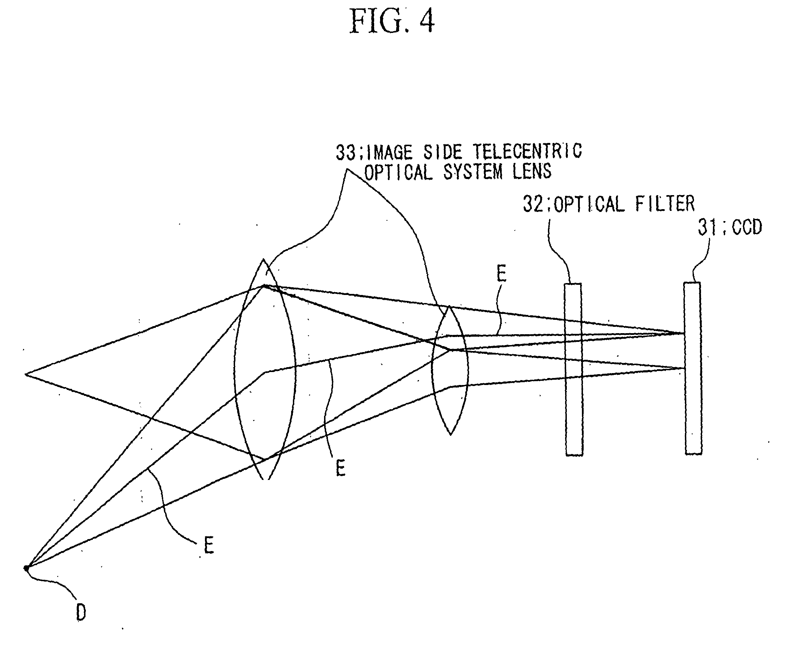

Next, referring to FIG. 4, a description is given of an optical filter and a lens system incorporated in the short base line length camera 12 and the long base line length camera 13 shown in FIG. 1. FIG. 4 is a diagram showing the positional relationship between a lens system provided inside the two cameras, and an optical filter. In this figure, reference numeral 31 denotes a CCD provided inside a camera for imaging an image of the reflected light. The light receiving surface thereof is provided so as to be perpendicular to the optical axis of the lens system provided in the camera. Reference numeral 32 indicates an optical filter which uses interference by a thin film of light wavelength order to pass light of a specified wavelength band, and which is provided so as to be parallel with the light receiving surface of the CCD 31.

The transmission wavelength band of the optical filter 32 is made to coincide with the wavelength band of the laser light emitted from the laser emitting section 21 shown in FIG. 2. Reference numeral 33 indicates an image side telecentric optical system lens which forms an image of light reflected on the target surface of the object to be measured onto the light receiving face of the CCD 31. The image side telecentric optical system lens 33 is a lens which outputs all of the input light perpendicularly. Therefore, the output light becomes parallel to the optical axis of the lens system. Parallel here means that the optical path (denoted by reference symbol E in FIG. 4) for which the light reflected at the point D shown in FIG. 4 forms an image on the CCD 31, is parallel with the optical axis of the image side telecentric optical system lens 33. That is to say, the reflected light is incident perpendicular with respect to the incident surface of the optical filter 32 and the light receiving surface of the CCD 31.

By using this image side telecentric optical system lens 33, then also with respect to the optical filter 32 which is positioned so as to be parallel with the light receiving surface of the CCD 31, the reflected light can be input perpendicularly thereto. As a result, the pass wavelength band of the optical filter 32 can be made to coincide with the wavelength band of the laser light generated by the laser emitting section 21, so that the input of disturbance light to the CCD 31 can be prevented. Furthermore, since the optical filter 32 is provided between the image side telecentric optical system lens 33 and the CCD 31, then even with a wide viewing angle, there is no longer the need for the wavelength band of the light passed by the optical filter 32 to be wide.

A distance measuring apparatus is provided which utilizes a light-section method capable of preventing input of disturbance light without narrowing measurement viewing angle. The apparatus comprises: a laser emitting section (11, 14) for generating laser light, an imaging section (12, 13, 15, 31) for imaging reflected light reflected by a surface of a target object, a telecentric optical system lens (33) for forming an image of the reflected light on the imaging section, an optical filter (32) provided between the telecentric optical system lens and the imaging section and perpendicular to an optical axis of the telecentric optical system lens, for passing light of a wavelength band of laser light emitted from the laser emitting section, and a distance calculation section (16) for calculating a distance to the object based on an image taken by the imaging section and a positional relationship between a light emission position of the laser light and an image position.

## Claims

1. A distance measuring apparatus comprising:
- a laser emitting section (11, 14) for generating laser slit light;
- an observation device comprising:
an imaging section (12, 13, 15, 31) for imaging reflected light of the laser light which has been reflected by a surface of a target object to be measured,
a telecentric optical lens system (33) for forming an image of the reflected light on the imaging section (12, 13, 15, 31) and
an optical filter (32) provided between the telecentric optical lens system (33) and the imaging section (12, 13, 15, 31) and
perpendicular to an optical axis of the telecentric optical lens system (33), for passing only light of a wavelength band of laser light emitted from the laser emitting section (11, 14); and
- a distance calculation section (16) for calculating a distance to the object based on an image taken by the imaging section (12, 13, 15, 31) of the observation device, based on a positional relationship between a light emission position of the laser light and an image position,
**characterized in that** the distance measuring apparatus comprises two of said observation devices a first of which (12, 15, 31, 32, 33) for observation of a large distance range incorporates in its imaging section a camera (12) having a short base line length and a second (13, 15, 31, 32, 33) of said observation devices for observation of a short distance range incorporates in its imaging section a camera (13) having a long base line length,
wherein the telecentric optical lens system (33) in each of the two observation devices is an image side telecentric optical lens system.

2. The distance measuring apparatus according to claim 1, **characterized in that** the laser emitting section (1, 14) comprises a beam emitting device (21, 22, 23, 24) for emitting multiple slit laser beams.

3. The distance measuring apparatus according to one of claims 1 or 2, **characterized in that** it is incorporated in a self-controlled robot.

4. The distance measuring apparatus according to claim 3, wherein the self-controlled robot is a bipedal robot (1).

5. A distance measuring method comprising the steps of:
emitting laser light onto a target object to be measured;
perpendicularly inputting by a first telecentric optical system (33) laser slit light reflected by the target object onto an incident surface of a first optical filter (32) which passes only light of a wavelength band of the laser light;
imaging the reflected light which has been passed by the first optical filter (32); and
measuring the distance to the object based on the obtained image and a positional relationship between a light emission position of the laser light and an image position,
**characterized in that**
the reflected laser light passed by an image side telecentric optical system forming the first telecentric optical system and by said first optical filter (32) for observation of a large distance range is imaged with a short base line length,
that the laser light reflected by the target object is perpendicularly inputted by an image side telecentric optical system forming a second telecentric optical system onto an incident surface of a second optical filter (33) which passes only light of said wavelength band of the laser light, and
that the reflected light which has been passed by the second optical filter (33) for observation of a short distance range is imaged within a long base line length.

## Patentansprüche

1. Abstandsmessvorrichtung, umfassend:
einen Laseremissionsabschnitt (11, 14) zum Erzeugen von Laserschlitzlicht;
eine Beobachtungsvorrichtung, umfassend:
einen Abbildungsabschnitt (12, 13, 15, 31) zum Abbilden von reflektiertem Licht des Laserlichts, das von einer Oberfläche eines zu messenden Zielobjekts reflektiert worden ist,
ein telezentrisches optisches Linsensystem (33) zum Ausbilden eines Abbildes des reflektierten Lichts auf dem Abbildungsabschnitt (12, 13, 15, 31), und
einen optischen Filter (32), der zwischen dem telezentrischen optischen Linsensystem (33) und dem Abbildungsabschnitt (12, 13, 15, 31) und senkrecht zu einer optischen Achse des telezentrischen optischen Linsensystems (33) vorgesehen ist, um nur Licht eines Wellenlängenbandes des vom Laseremissionsabschnitt (11, 14) emittierten Laserlichts durchzulassen; und
einen Abstandberechnungsabschnitt (16) zum Berechnen eines Abstandes zu dem Objekt auf der Grundlage eines Abbildes, das vom Abbildungsabschnitt (12, 13, 15, 31) der Beobachtungsvorrichtung aufgenommen worden ist, und auf der Grundlage einer Positionsbeziehung zwischen einer Lichtemissionsposition des Laserlichts und einer Abbildungsposition,
**dadurch gekennzeichnet, dass** die Abstandsmessvorrichtung zwei der Beobachtungsvorrichtungen umfasst, von denen eine erste (12, 15, 31, 32, 33) zum Beobachten eines großen Abstandsbereiches in ihrem Abbildungsabschnitt eine Kamera (12) mit einer kurzen Basislinienlänge enthält, und eine zweite (13,15, 31, 32, 33) der Beobachtungsvorrichtungen für die Beobachtung eines kurzen Abstandsbereiches in ihrem Abbildungsabschnitt eine Kamera (13) mit einer langen Basislinienlänge enthält,
wobei das telezentrische optische Linsensystem (33) in jeder der zwei Beobachtungsvorrichtungen ein bildseitiges telezentrisches optisches Linsensystem ist.

2. Abstandsmessvorrichtung nach Anspruch 1, **dadurch gekennzeichnet, dass** der Laseremissionsabschnitt (1, 14) eine Strahlemissionsvorrichtung (21, 22, 23, 24) zum Emittieren mehrerer Schlitzlaserstrahlen umfasst.

3. Abstandsmessvorrichtung nach einem der Ansprüche 1 oder 2, **dadurch gekennzeichnet, dass** sie in einen selbstgesteuerten Roboter eingebaut ist.

4. Abstandsmessvorrichtung nach Anspruch 3, bei der der selbstgesteuerte Roboter ein zweibeiniger Roboter (1) ist.

5. Abstandsmessverfahren, das die Schritte umfasst:
Emittieren von Laserlicht auf ein zu messendes Zielobjekt;
senkrechtes Eingeben von Laserschlitzlicht, das von dem Zielobjekt reflektiert wird, mittels eines ersten telezentrischen optischen Systems (33) auf eine Eintrittsfläche eines ersten optischen Filters (32), der nur Licht eines Wellenlängenbandes des Laserlichts durchlässt;
Abbilden des reflektierten Lichts, das vom ersten optischen Filter (32) durchgelassen worden ist; und
Messen des Abstands zu dem Objekt auf der Grundlage des erhaltenen Abbildes und einer Positionsbeziehung zwischen einer Lichtemissionsposition des Laserlichts und einer Abbildungsposition,
**dadurch gekennzeichnet, dass**
das reflektierte Laserlicht, das von einem bildseitigen telezentrischen optischen System, das das erste telezentrische optische System bildet, und von dem ersten optischen Filter (32) zum Beobachten eines großen Abstandsbereiches durchgelassen worden ist, mit einer kurzen Basislinienlänge abgebildet wird,
das von dem Zielobjekt reflektierte Laserlicht mittels eines bildseitigen telezentrischen optischen Systems, das ein zweites telezentrisches optisches System bildet, senkrecht auf eine Eintrittsfläche eines zweiten optischen Filters (33), der nur Licht des Wellenlängenbandes des Laserlichts durchlässt, eingegeben wird, und
das reflektierte Licht, das vom zweiten optischen Filter (33) zum Beobachten eines kurzen Abstandsbereiches durchgelassen worden ist, innerhalb einer langen Basislinienlänge abgebildet wird.

## Revendications

1. Appareil de mesure de distance comprenant :
- une section d'émission à laser (11, 14) pour générer une lumière laser dispersée ;
- un dispositif d'observation comprenant :
une section de mise en image (12, 13, 15, 31) pour représenter en images la lumière réfléchie de la lumière laser qui a été réfléchie par une surface d'un objet cible devant être mesuré,
un système à lentilles optiques télécentrique (33) pour former une image de la lumière réfléchie sur la section de mise en image (12, 13, 15, 31), et
un filtre optique (32) fourni entre le système à lentilles optiques télécentrique (33) et la section de mise en image (12, 13, 15, 31) et perpendiculaire à un axe optique du système à lentilles optiques télécentrique (33) pour transmettre seule la lumière d'une bande de longueurs d'ondes de la lumière laser émise à partir de la section d'émission à laser (11, 14) ; et
- une section de calcul de distance (16) pour calculer une distance jusqu'à l'objet sur la base d'une image prise par la section de mise en image (12, 13, 15, 31) du dispositif d'observation, sur la base d'une relation positionnelle entre une position d'émission de lumière de la lumière laser et une position d'image,
**caractérisé en ce que** l'appareil de mesure de distance comprend deux desdits dispositifs d'observation, dont un premier (12, 15, 31, 32, 33), pour l'observation d'une plage de grandes distances, incorpore dans sa section de mise en image une caméra (12) ayant une longueur de ligne de base courte et un second (13, 15, 31, 32, 33) desdits dispositifs d'observation, pour l'observation d'une plage de courtes distances, incorpore dans sa section de mise en image une caméra (13) ayant une longueur de ligne de base longue,
dans lequel le système à lentilles optiques télécentrique (33) dans chacun des deux dispositifs d'observation est un système à lentilles optiques télécentrique d'image latérale.

2. Appareil de mesure de distance selon la revendication 1, **caractérisé en ce que** la section d'émission à laser (1, 14) comprend un dispositif d'émission de faisceau (21, 22, 23, 24) pour émettre plusieurs faisceaux laser dispersés.

3. Appareil de mesure de distance selon l'une des revendications 1 ou 2, **caractérisé en ce qu'**il est incorporé dans un robot autonome.

4. Appareil de mesure de distance selon la revendication 3, dans lequel le robot autonome est un robot bipède (1).

5. Procédé de mesure de distance comprenant les étapes consistant à :
émettre une lumière laser sur un objet cible devant être mesuré ;
fournir en entrée de manière perpendiculaire à l'aide d'un premier système optique télécentrique (33) une lumière laser dispersée réfléchie par l'objet cible sur une surface incidente d'un premier filtre optique (32) qui transmet seule la lumière d'une bande de longueur d'onde de la lumière laser ;
représenter en image la lumière réfléchie qui a été transmise par le premier filtre optique (32) ; et
mesurer la distance jusqu'à l'objet sur la base de l'image obtenue et d'une relation positionnelle entre une position d'émission de lumière de la lumière laser et une position d'image,
**caractérisé en ce que**
la lumière laser réfléchie transmise par un système optique télécentrique d'image latérale formant le premier système optique télécentrique et par ledit premier filtre optique (32) pour l'observation d'une plage de grandes distances est représentée en image par une longueur de ligne de base courte,
**en ce que** la lumière laser réfléchie par l'objet cible est perpendiculairement fournie en entrée par un système optique télécentrique latéral d'image formant un second système optique télécentrique sur une surface incidente d'un second filtre optique (33) qui transmet seule la lumière de ladite bande de longueur d'onde de la lumière laser, et
**en ce que** la lumière réfléchie qui a été transmise par le second filtre optique (33) pour l'observation d'une plage de courtes distances est représentée en image dans une longueur de ligne de base longue.
